# EUROPÄISCHE PATENTSCHRIFT

(11) **EP 1 525 121 B1**
(45) Veröffentlichungstag und Bekanntmachung des Hinweises auf die Patenterteilung: **23.04.2008**
(21) Anmeldenummer: 03740173.4
(22) Anmeldetag: 03.06.2003
(51) Int. Cl.: B60R 21/13

(54) **ÜBERROLLSCHUTZSYSTEM FÜR KRAFTFAHRZEUGE**
ROLLOVER PROTECTION SYSTEM FOR MOTOR VEHICLES
SYSTEME DE PROTECTION EN CAS DE RETOURNEMENT POUR VEHICULES

(30) Priorität: 02.07.2002 DE 10229635
(43) Veröffentlichungstag der Anmeldung: 27.04.2005
(73) Patentinhaber: ISE Innomotive Systems Europe GmbH, 51702 Bergneustadt (DE)
(72) Erfinder: KUMOR, Gyula, H-1164 Budapest (HU)
(74) Vertreter: Fuchs
(86) Internationale Anmeldenummer: PCT/EP2003/005765
(87) Internationale Veröffentlichungsnummer: WO 2004/005083

(56) Entgegenhaltungen:
- EP-A- 1 186 481
- DE-A- 3 905 470
- DE-C- 4 425 954
- DE-C- 10 044 926

## Beschreibung

Die Erfindung bezieht sich auf ein Überrollschutzsystem für Kraftfahrzeuge, mit einem Überrollkörper, der in einer fahrzeugfesten, einem Fahrzeugsitz zugeordneten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende verriegelte Stellung bringbar ist, wobei die Haltevorrichtung ein mit dem Überrollkörper verbundenes Halteglied und ein fahrzeugfest angeordnetes sensorgesteuertes Auslösesystem mit einem Auslöseglied, das in lösbarer mechanischer Wirkverbindung mit dem Halteglied steht, besitzt.

Derartige Überrollschutzsysteme dienen zum Schutz der Insassen in Kraftfahrzeugen ohne schützendes Dach, typischerweise in Cabriolets oder Sportwagen.

Es ist dabei bekannt, einen die gesamte Fahrzeugbreite überspannenden, fest installierten Überrollbügel vorzusehen oder jedem Fahrzeugsitz einen höhenunveränderlich fest installierten Überrollbügel zuzuordnen.

Bei beiden Lösungen wird der erhöhte Luftwiderstand und das Auftreten von Fahrgeräuschen als nachteilig empfunden, abgesehen von der Beeinträchtigung des Fahrzeugaussehens bei Cabriolets.

Am Markt setzen sich daher immer mehr konstruktive Lösungen durch, bei denen der Überrollbügel im Normalzustand eingefahren ist, und im Gefahrenfall, also bei einem drohenden Überschlag, schnell in eine schützende Position ausgefahren wird, um zu verhindern, daß die Fahrzeuginsassen durch das sich überschlagende Fahrzeug erdrückt werden.

Diese Lösungen weisen typischerweise für jeden Fahrzeugsitz einen in einem fahrzeugfesten Kassetten-Gehäuse geführten U-förmigen oder aus einem Profilkörper gebildeten Überrollbügel, auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, schützende Stellung bringbar ist, wobei eine dann in Wirkeingriff tretende Verriegelungseinrichtung ein Eindrücken des Überrollbügels in die Kassette verhindert.

Die Haltevorrichtung besitzt dabei typischerweise ein am Überrollkörper befestigtes Halteglied, das in lösbarer mechanischer Wirkverbindung mit einem Auslöseglied an einem sensorgesteuerten Auslösesystem steht, das typischerweise durch einen Auslösemagneten, den sogenannten Crashmagneten, oder durch ein pyrotechnisches Auslöseglied, gebildet ist.

Die Verriegelungseinrichtung besteht typischerweise aus einer schwenkbar angelenkten, federvorgespannten Rastklinke mit Zahnsegmenten und einer feststehenden Zahnleiste, einem Rastdorn oder dergleichen, wobei ein Verriegelungs-Element mit dem Überrollbügel und das andere fahrzeugfest verbunden ist.

Eine derartige Kassetten-Konstruktion eines Überrollbügelschutzsystems zeigt beispielsweise die DE 100 40 649 C1 und die EP1186481.

Typischerweise sind bei den Kraftfahrzeugen zumindest die Vordersitze, und damit auch die ihnen zugeordneten Überrollbügel, gleich breit entsprechend der halben Fahrzeugbreite. Bei dieser Aufteilung macht es prinzipiell keine Probleme, mit nur einem Halteglied und nur einem Auslösesystem pro Überrollbügel auszukommen.

Es gibt jedoch auch Fahrzeugtypen, die immer stärker auf den Markt drängen, z.B. die Kombifahrzeuge, Minibusse und Geländewagen, die mindestens im Bereich der Fondsitze einen überbreiten Fahrzeugsitz besitzen, der etwa 2/3 der Fahrzeugbreite einnimmt.
Dabei handelt es sich typischerweise um Sitze mit stabilen Lehnen (Holmen) mit Umlegefunktion zur Vergrößerung des Laderaumes.

Die typische Kassettenbreite für die Normalsitze liegt bei 250 mm, wogegen bei den vorgenannten überbreiten Sitzen eine Kassettenbreite von 450 mm notwendig ist. Bei derartig breiten Überrollbügeln könnte es in Bezug auf Verkanten des Haltegliedes bzw. des auszufahrenden Überrollbügels schon Probleme bei der Auslösung der Haltevorrichtung bereiten, wenn die Haltevorrichtung aus nur einem Halteglied besteht, das direkt von einem Auslösesystem betätigt wird.

Der Erfindung liegt die Aufgabe zugrunde, ausgehend von dem eingangs bezeichneten Überrollschutzsystem dieses so auszubilden, daß auch bei vorgenannten überbreiten Überrollbügeln eine sicher auslösende Haltevorrichtung sowie eine sichere Führung des ausgelösten Überrollbügels gegeben ist.

Die Lösung dieser Aufgabe gelingt bei einem Überrollschutzsystem für Kraftfahrzeuge, mit einem Überrollkörper, der in einer fahrzeugfesten, einem Fahrzeugsitz zugeordneten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende verriegelte Stellung bringbar ist, wobei die Haltevorrichtung ein mit dem Überrollkörper verbundenes Halteglied und ein fahrzeugfest angeordnetes sensorgesteuertes Auslösesystem mit einem Auslöseglied, das in lösbarer mechanischer Wirkverbindung mit dem Halteglied steht, besitzt, gemäß der Erfindung dadurch, daß eine fahrzeugfest drehbar gelagerte, sich entlang der Breite des Überrollkörpers erstreckende Koppelwelle vorgesehen ist, auf der mittensymmetrisch zum Überrollkörper mindestens zwei, jeweils durch eine Feder in Schließrichtung vorgespannte Halteklauen beabstandet befestigt sind, die in haltenden Wirkeingriff mit zwei am Überrollkörper im entsprechenden Abstand befestigten Gegenklauen bringbar sind, und der ferner ein Koppelglied für eine Wirkverbindung der Koppelwelle mit dem Auslöseglied des Auslösesystems zugeordnet ist, das mittels einer Lösefeder in Öffnungsrichtung der Halteklauen vorgespannt ist.

Durch die symmetrische Anordnung der Halteklauen und Gegenklauen wirkt die Vorspannkraft der Antriebs-Druckfedern im gehaltenen Zustand des Überrollbügels gleichförmig verteilt auf die Wirkverbindung der Klauenpaare, so daß die aufzubringenden Auslösekräfte weitgehend gleich sind und in Verbindung mit der Koppelwelle eine gleichzeitige Aufhebung der Wirkverbindung auch bei überbreiten Überrollkörpern mit einfachen Mitteln gewährleistet ist.

Es ist bei Überrollschutzsystemen mit einem die gesamte Wagenbreite überspannenden, ausfahrbaren Überrollbügel an sich bekannt, zwei beabstandete Halteglieder vorzusehen.

So zeigt die DE 197 12 955 A1 eine Ausführung, bei der an jedem Schenkel des Überrollbügels als Halteglied eine Wippe nach DE 43 14 538 A1 vorgesehen ist, die jeweils im Wirkeingriff mit einem Aktuator steht. Diese bekannte Ausführung besitzt somit zwei komplette Haltevorrichtungen, was nicht nur einen erhöhten Aufwand bedeutet, sondern auch Risiken in Bezug auf eine gleichzeitige, d.h. synchrone, Auslösung beider Systeme schafft.

Die DE 195 40 819 C2 zeigt demgegenüber eine Ausführung, bei der nur ein Aktuator vorgesehen ist, der dem einem (ersten) Schenkelrohr und einem daran angebrachten Halteglied zugeordnet ist, wobei an dem zweiten Schenkelrohr ein Halteglied angebracht ist, das im Wirkeingriff mit einem Haltehebel steht. Dieser Haltehebel steht über eine sich über die Bügelbreite erstreckende Stange und einem weiteren Hebel in Wirkverbindung mit einer Steuernocke am ersten Schenkelrohr, die beim Auslösen des ersten Schenkelrohres über die Stange den Haltehebel am zweiten Schenkelrohr indirekt auslöst.

Diese Ausführung hat zwar den Vorteil, daß nur ein Aktuator benötigt wird, jedoch ist auf der anderen Seite eine relativ komplexe, die Auslösekraft erhöhende mechanische Wirkverbindung zwischen beiden Schenkelrohren mit Hebeln und einer linear verschiebbaren Stange notwendig.

Entsprechendes gilt für das Doppelkassetten-Überroll-Schutzsystem nach der DE 100 44 926 C1 mit zwei nebeneinander auf einem fahrzeugfesten Träger befestigten Überrollbügel-Kassettensystemen, die jeweils eine Haltevorrichtung aber einen gemeinsamen Aktuator besitzen, der mit den Haltevorrichtungen mechanisch verkoppelt ist.

Weiterbildungen sowie Ausgestaltungen der Erfindung sind in den Unteransprüchen gekennzeichnet und werden auch in der Figurenbeschreibung dargestellt.

Anhand von zwei in den Zeichnungen dargestellten Ausführungsbeispielen wird die Erfindung näher beschrieben.

Es zeigen:
- Fig. 1: in einer schematischen Frontalansicht einen überbreiten, U-förmigen Überrollbügel, der in den Holmen der Rückenlehne eines Fahrzeugsitzes geführt aufgenommen ist, sowie die zugehörige Haltevorrichtung mit zwei auf einer Koppelwelle beabstandet angeordneten Halteklauen und einer ersten Ausführungsform eines Koppelgliedes zwischen Koppelwelle und einem sensorgesteuerten Auslösesystem,
- Fig. 2: eine Draufsicht auf die Rückenlehne nach Fig. 1 bei abgenommenem Überrollbügel,
- Fig. 3: in fünf Figurenteilen A bis E Schnittansichten der Halteklauen und des Koppelgliedes entlang der gezeigten Schnittlinien in Fig. 1, wobei die Figurenteile A - C den haltenden Ruhezustand und die Figurenteile D und E den ausgelösten Zustand des Überrollbügels zeigen,
- Fig. 4: eine Schnittansicht entsprechend Fig. 3 C unter näherer Darstellung der Konstruktion für das Vorbereiten des Reversierens des ausgefahrenen Bügels, und
- Fig. 5: in vier Figurenteilen verschiedene Ansichten einer zweiten Ausführungsform des Koppelgliedes zwischen der Koppelwelle und dem Auslösesystem, und zwar im Figurenteil A eine Frontalansicht entsprechend Fig. 1, im Figurenteil B eine Ansicht auf die linke Stirnseite der Koppelwelle, im Figurenteil C in einer Ausschnittdarstellung eine Draufsicht auf das Koppelglied, und im Figurenteil D eine Seiten-Ansicht auf das Koppelglied gesehen von der Linie II - II im Figurenteil A.

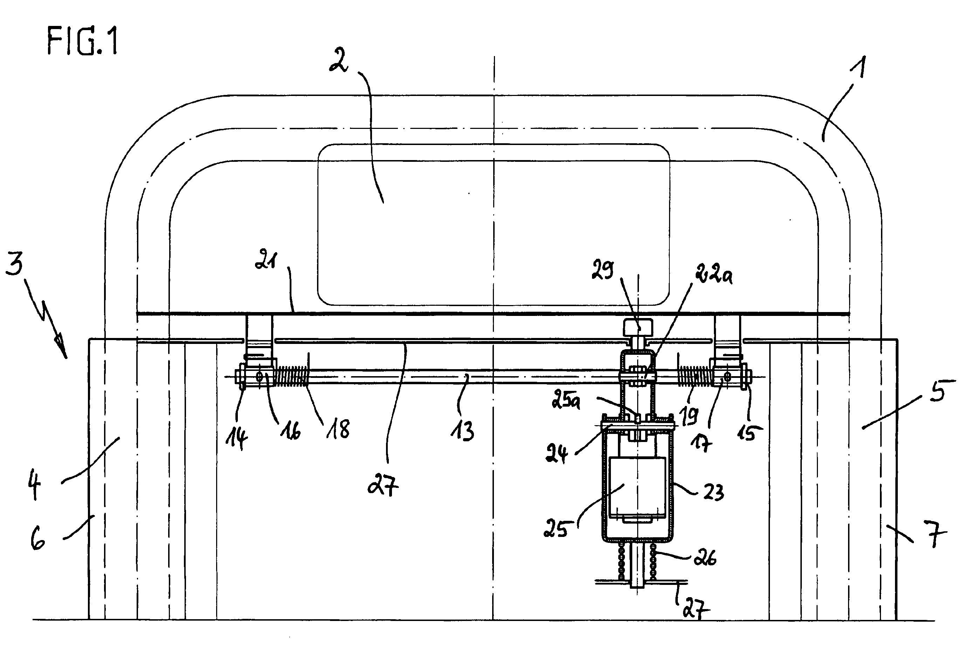

Die Fig. 1 zeigt in einer schematisierten Frontalansicht-Darstellung einen überbreiten U-förmigen Überrollbügel 1 mit ggf. integrierter Kopfstütze 2, der einem entsprechend breiten Fondsitz 3 zugeordnet ist. In diesem Ausführungsbeispiel erfolgt die Zuordnung mit Vorteil in der Weise, daß der Überrollbügel 1 mit seinen beiden Schenkeln 4, 5 direkt in den Holmen 6, 7 der Rückenlehne 27 des Fahrzeugsitzes geführt-aufgenommen ist, wobei im Innern der Bügel-Schenkel 4, 5 in üblicher Weise nicht dargestellte Antriebs-Druckfedern angeordnet sind:

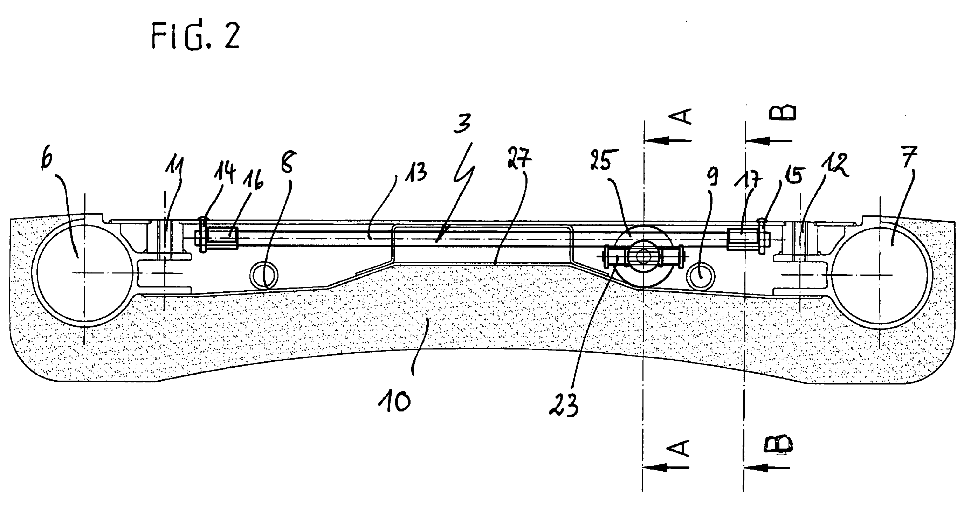

Die Holme 6, 7 und der Aufbau der Rückenlehne 3 sind insbesondere auch in der Draufsicht-Darstellung nach Fig. 2 zu erkennen. Der Überrollbügel 1 und die Kopfstütze 2 sind in dieser Darstellung abgenommen; die Kopfstütze wird dabei in den Buchsen 8, 9 geführt aufgenommen. Auch zeigt die Fig. 2 die Polsterung 10 und Befestigungsbleche 27 der Rückenlehne. Ferner sind Befestigungs-Öffnungen 11, 12 zur Verbindung mit dem die Rückenlehne mit dem Sitzkörper verbindenden Rahmen-Elementen zu erkennen.

Im Normalzustand muß der Überrollbügel 1 gegen die Kraft der vorgespannten Antriebs-Druckfedern in einer unteren, eingefahrenen Ruhelage haltbar sein, und im Überschlag-Fall durch Lösen des Haltezustandes durch die Federkraft der Antriebs-Druckfedern in eine obere, schützende und dort verriegelte Stellung bringbar sein.

Dazu dient eine spezielle, an den überbreiten Überrollbügel angepaßte Haltevorrichtung, die im folgenden beschrieben wird:

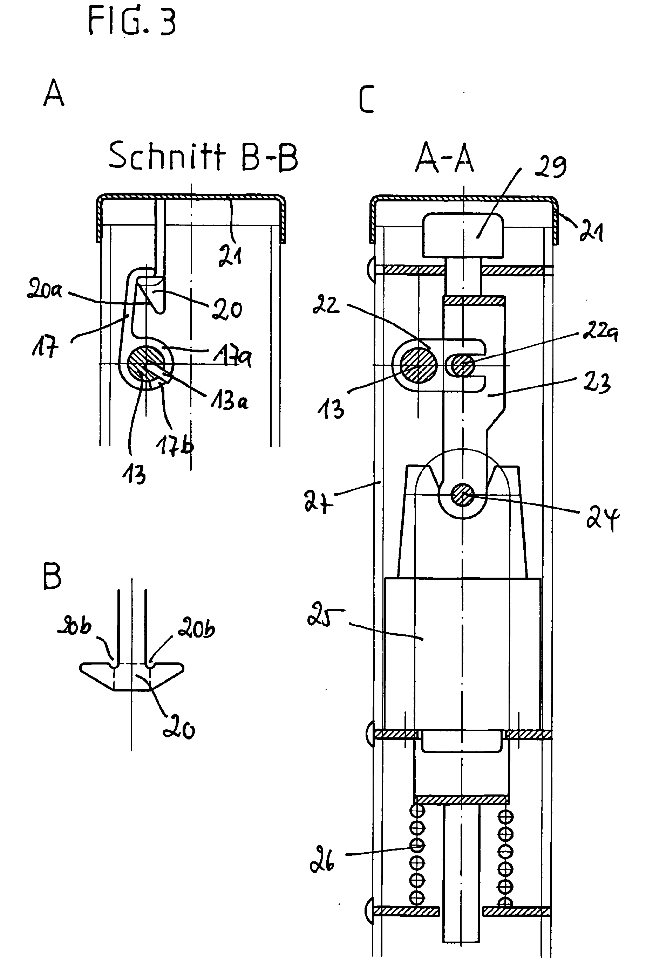

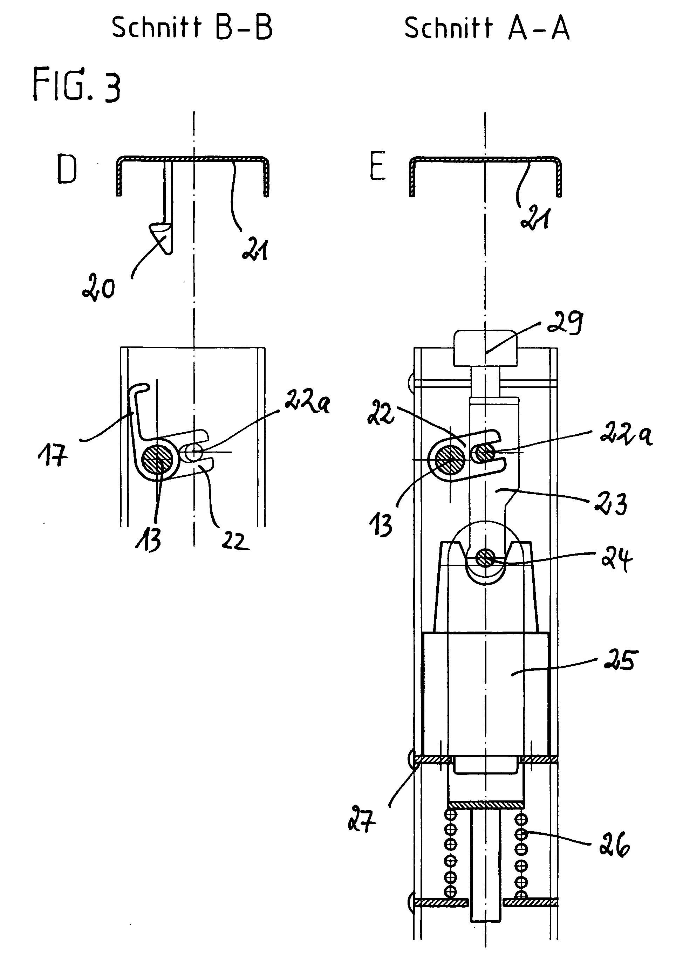

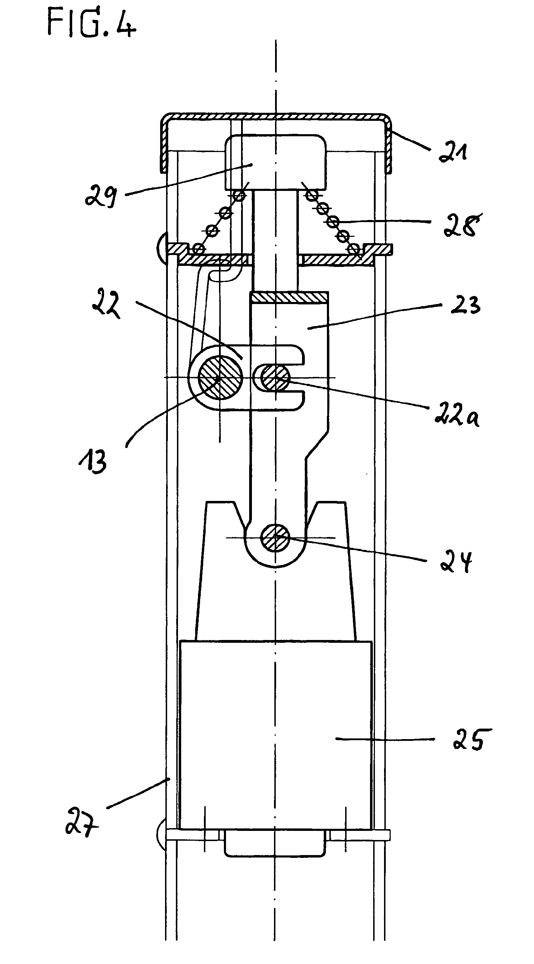

Die Haltevorrichtung weist eine langgestreckte Koppelwelle 13 auf, die in Lagerbuchsen 14, 15, die ihrerseits fest in der Rückenlehne 3 angebracht sind, drehbar gehaltert ist. An den beiden Enden der Koppelwelle 13 ist jeweils eine Halteklaue 16, 17 angebracht (siehe auch Fig. 3 A), und zwar in der Weise, daß die Halteklauen jeweils eine Lagerbuchse 16 a, 17 a mit einem Langloch 16 b, 17 b, in das jeweils ein an der Koppelwelle befestigter Mitnahmestift 13 a eingreift, aufweist. Bei einer Drehung der Koppelwelle nimmt der Mitnahmestift 13 a die zugehörige Halteklaue mit. Das Langloch sorgt für einen Toleranzausgleich und einen Unempfindlichkeitsbereich. Mittels Federn 18, 19 sind die Halte-Klauen über die Koppelwelle 13 im Uhrzeigersinn - von links auf die Stirnseite der Koppelwelle 13 entsprechend den Figuren 3, 4 gesehen - vorgespannt. Im vorgespannten Zustand stehen die Halte-Klauen 16, 17 im den Überrollbügel niederhaltenden Wirkeingriff mit Gegenklauen 20, die an einer U-förmigen Traverse 21, die mit den Schenkeln 4, 5 des Überrollbügels 1 verbunden ist, befestigt sind (Fig. 3 A - C). Vertiefungen 20 b in den Gegenklauen sorgen für einen zusätzlichen Formschluß (Fig. 3 B).

Durch die aus Fig. 1 besonders erkennbare symmetrische Anordnung der Klauenpaare über die Bügelbreite wirkt die Vorspannkraft der Druckfedern im gehaltenen Zustand des Überrollbügels gleichförmig auf die Wirkverbindung der Klauen, so daß die aufzubringenden Auslösekräfte weitgehend gleich sind und eine gleichzeitige Aufhebung der Wirkverbindung gewährleistet ist.

Soweit die Beschreibung der Haltevorrichtung im den Überrollbügel 1 in der Ruhelage niederhaltenden Zustand gemäß den Figuren 1 und 3 A - C.

Um den Überrollbügel 1 im Gefahrenfall oder betrieblich zu Test- oder Inspektionszwecken ausfahren zu können, muß die Wirkverbindung zwischen den Klauen 16, 17 und den Gegenklauen 20 aufgehoben, d.h. die Koppelwelle 13 muß gegen die Vorspannkraft der Federn 18, 19 verdreht werden. Für diesen verdrehenden Wirkeingriff ist, wie insbesondere die Fig. 3 zeigt, auf der Koppelwelle 13 eine Steuergabel 22 fest angebracht, die einen Steuerbolzen 22 a umfaßt, der seinerseits in einem rahmenförmigen Stellelement 23 fest angebracht ist. In diesem Stellelement ist ferner an seinem unteren Ende ein Haltebolzen 24 fest aufgenommen, der im lösbaren Wirkeingriff mit einem hakenförmigen Auslöseglied 25 a eines sensorgesteuerten Aktuators 25, wie er beispielsweise in der DE 197 50 693.3 beschrieben wird, steht (Fig. 1). Der Aktuator ist innerhalb des rahmenartigen Stellelementes 23 ohne Verbindung mit diesem frei aufgenommen und fest mit der Rückenlehne 3 fahrzeugfest verbunden. Das Stellelement 23 selbst ist vorgespannt über eine Feder 26 fahrzeugfest mit der Rückenlehne verbunden.

Wird bei einem Überschlag der Aktuator 25 sensorgesteuert oder in nicht dargestellter Weise zu Testzwecken manuell ausgelöst, gibt das Auslöseglied 25 a den Haltebolzen 24 frei. Dadurch kann die Feder 26 das rahmenartige Stellelement 23 nach oben verschieben, wodurch über den Steuerbolzen 22 a die Steuergabel 22 mit der Koppelwelle 13 - von links aus gesehen - gegen den Uhrzeigersinn verdreht wird (Fig. 3 E). Dadurch werden, wie die Fig. 3 D zeigt, die Halteklauen 17 (und 16) entsprechend verschwenkt, unter Freigabe der Gegenklaue 20. Damit wird der Überrollbügel über die Traverse 21 freigegeben und kann unter der Kraft der vorgespannten Antriebs-Druckfedern nach oben ausfahren.

Ohne Gefahr oder zu Testzwecken ausgelöste und ausgefahrene Überrollbügel müssen anschließend wieder reversiert, d.h. in den Ausgangszustand manuell gegen die Kraft der Antriebs-Druckfedern zurückgedrückt werden, wobei die Haltevorrichtung selbsttätig wieder einrasten soll. Insbesondere bei den überbreiten Überrollbügel-Systemen ist es dazu notwendig, mit beiden Händen den Bügel einzuschieben.

Zur Einleitung des Reversiervorganges ist an dem rahmenförmigen Stellelement 23 über eine Kegelfeder 28 ein Betätigungsknopf 29 fest angebracht, der aus der Rückenlehne herausragt (Fig. 4). Beim manuellen Niederdrücken dieses Betätigungs-Knopfes 29 bewegt sich das rahmenartige Stellelement 23 mit dem Steuerbolzen 22 a nach unten, wodurch über die Steuergabel 22 die Koppelwelle 13 - wieder von links aus gesehen - im Uhrzeigersinn und damit auch die in der Offen-Stellung befindlichen Halte-Klauen 16, 17 in die Schließstellung verschwenkt werden. In der Endstellung des niederbewegten Stellelementes 23 gelangt der Haltebolzen 24 wieder in Wirkeingriff mit dem hakenförmigen Auslöseglied 25 a des Aktuators, wodurch das Auslösesystem neu gespannt ist. Jetzt kann der Überrollbügel mit beiden Händen eingedrückt werden. Dabei gleitet die Gegenklaue 20 mit ihrer vorderen Schräge 20 a an der zugeordneten Halte-Klaue 16, 17 elastisch nachgebend vorbei, d.h. überfährt sie, und tritt wieder im haltenden Wirkeingriff mit dieser. Die Haltevorrichtung ist damit wieder gespannt.

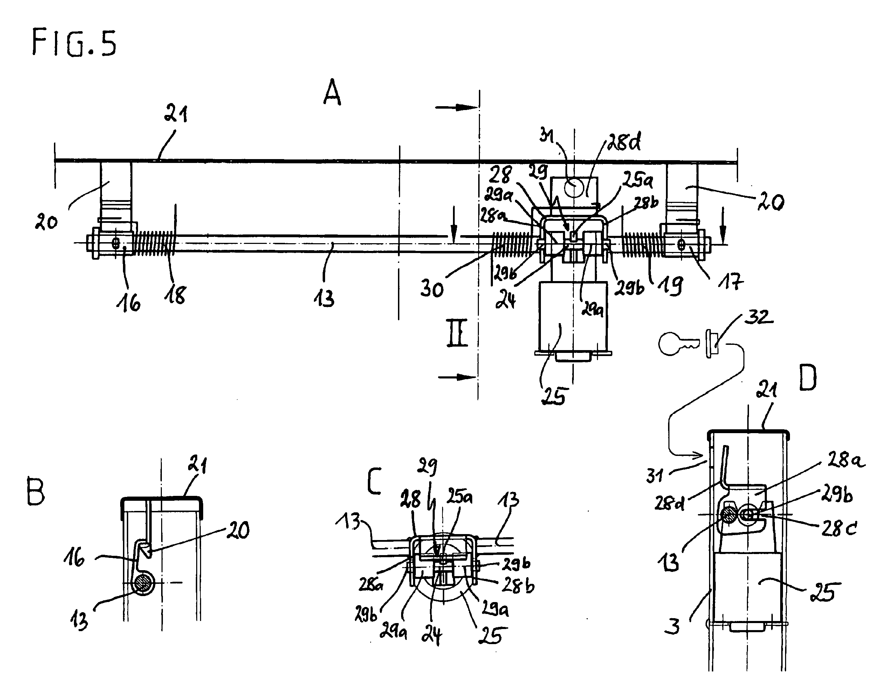

Die Figur 5 mit ihren Figurenteilen A - D zeigt eine Alternative für die Auslösung der Haltevorrichtung und für das Reversieren. Die Teile der Fig. 5, die mit denjenigen der Fig. 1 - 4 übereinstimmen, sind mit denselben Bezugszeichen versehen. Für den Auslöse- und Reversiereingriff mit der Koppelwelle 13 ist ein bügelartiger Halter 28, der mit seinen beiden Bügel-Schenkeln 28 a, 28 b fest mit der Koppelwelle 13 verbunden ist vorgesehen, wobei im Raum zwischen beiden Bügel-Schenkeln die Koppelwelle 13 unterbrochen ist. In beiden Bügelschenkeln befinden sich Schlitze 28 c, in denen eine mehrstufige Haltewelle 29 längsverschiebbar aufgenommen ist. Die mittlere Stufe der Haltewelle bildet den Haltebolzen 24, der in Wirkeingriff mit dem hakenförmigen Auslöseglied 25 a des Aktuators 25 bringbar ist. Mit den beiden, dem Haltebolzen benachbarten, Stufen 29 a liegt die Haltewelle im Ruhezustand auf komplementären Ausnehmungen im Aktuator auf. Sie dienen der Ausrichtung bzw. dem Positionieren beim Reversieren. Die Wellenstufen 29 b an beiden Enden der Haltestufe dienen der Halterung der Haltewelle in den Schlitzen 28 c des bügelartigen Halters.

Der bügelartige Halter 28 ist mittels einer Spiralfeder 30, die in der Funktion letztlich der Feder 26 im Ausführungsbeispiel nach den Figuren 1 bis 4 entspricht, vorgespannt, und zwar derart, daß die Spiralfeder 30 die Tendenz hat, den Halter 28 gegen den Uhrzeigersinn (gesehen auf Fig. 5 B) zu verdrehen, woran sie im Ruhezustand des Systems durch den Wirkeingriff des Haltebolzens 24 mit dem hakenförmigen Auslöseglied 25 a des Aktuators gehindert wird.

Sobald dieser Wirkeingriff ausgelöst wird, sei es sensorgesteuert oder manuell, wird der Haltebolzen 24 frei und die Feder 30 verdreht den Halter 28 mit der Koppelwelle 13 unter Aufhebung des Wirkeingriffes der Halteklauen 16, 17 mit den Gegenklauen 20 gegen den Uhrzeigersinn. Dadurch fährt der Überrollbügel unter der Kraft der vorgespannten Antriebs-Druckfedern aus.

Zum Reversieren wird der bügelartige Halter 28 an einem oberen Fortsatz 28 d mittels eines Werkzeuges (Schraubenzieher) oder manuell durch eine Öffnung 31 in der Rückwand 3 - gesehen in der Ansicht nach Fig. 5 D - nach vorne gedrückt, bis der Haltebolzen 24 wieder im Aktuator 25 einrastet. Dabei wird die Koppelwelle 13 so verdreht, daß die Halteklauen 16, 17 wieder in die Schließstellung gelangen.

Danach kann, wie im ersten Ausführungsbeispiel, der Überrollbügel mit beiden Händen eingedrückt werden, bis die Gegenklauen 20 wieder in Wirkeingriff mit den Halteklauen gelangen.

Die Öffnung 31 kann dabei zur Vermeidung einer Bedienung durch Unbefugte durch eine entsprechend gestaltete Verschlußkappe 32 abgesperrt werden.

In den Figuren ist jeweils nur die Haltevorrichtung für das Halten des Überrollbügels im Ruhezustand sowie seine Auslösung daraus dargestellt. Die Verriegelung des Überrollbügels in der ausgefahrenen Stellung erfolgt mit bekannten Komponenten.

## Patentansprüche

1. Überrollschutzsystem für Kraftfahrzeuge, mit einem Überrollkörper, der in einer fahrzeugfesten, einem Fahrzeugsitz zugeordneten Führungseinheit geführt aufgenommen ist, und der im Normalzustand gegen die Kraft von mindestens einer vorgespannten Antriebs-Druckfeder durch eine Haltevorrichtung in einer unteren, eingefahrenen Ruhelage haltbar ist, und unter Lösen der Haltevorrichtung durch die Federkraft der Antriebs-Druckfeder in eine obere, schützende verriegelte Stellung bringbar ist, wobei die Haltevorrichtung ein mit dem Überrollkörper verbundenes Halteglied und ein fahrzeugfest angeordnetes sensorgesteuertes Auslösesystem mit einem Auslöseglied, das in lösbarer mechanischer Wirkverbindung mit dem Halteglied steht, besitzt, **dadurch gekennzeichnet, daß** eine fahrzeugfest drehbar gelagerte, sich entlang der Breite des Überrollkörpers (1) erstreckende Koppelwelle (13) vorgesehen ist, auf der mittensymmetrisch zum Überrollkörper mindestens zwei, jeweils durch eine Feder (18, 19) in Schließrichtung vorgespannte Halteklauen (16, 17) beabstandet befestigt sind, die in haltenden Wirkeingriff mit zwei am Überrollkörper (1) im entsprechenden Abstand befestigten Gegenklauen (20) bringbar sind, und der ferner ein Koppelglied (22, 22 a, 23, 24; 28, 29) für eine Wirkverbindung der Koppelwelle mit dem Auslöseglied (25 a) des Auslösesystems (25) zugeordnet ist, das mittels einer Lösefeder (26; 30) in Öffnungsrichtung der Halteklauen (16, 17) vorgespannt ist.

2. Überrollschutzsystem nach Anspruch 1, **dadurch gekennzeichnet, daß** an dem Koppelglied ein Betätigungselement (29; 28 d) für die Wiederherstellung der Wirkverbindung mit dem Auslöseglied (25 a) des Auslösesystems (25) und das Verdrehen der Halteklauen in Schließrichtung nach einer Auslösung der Haltevorrichtung vorgesehen ist.

3. Überrollschutzsystem nach Anspruch 1 oder 2, **dadurch gekennzeichnet, daß** das Koppelglied aus einem durch die Lösefeder (26) vorgespannten rahmenartigen Stellelement (23), an dem ein Haltebolzen (24) für den Wirkeingriff mit dem Auslöseglied (25 a) des Auslösesystems und ein Steuerbolzen (22 a) befestigt sind, und aus einer auf der Koppelwelle (13) befestigten Steuergabel (22), die in der Gabelöffnung den Steuerbolzen (22 a) umfaßt, besteht.

4. Überrollschutzsystem nach Anspruch 1 oder 2, **dadurch gekennzeichnet, daß** das Koppelglied aus einem durch die Lösefeder (30) drehbar vorgespannten, auf der Koppelwelle (13) befestigten bügelartigen Halter (28) besteht, der an beiden gegenüberliegenden Schenkeln (28 a, 28 b) jeweils einen Schlitz (28 c) aufweist, in denen eine Welle (29) mit einem Haltebolzen (24 a) für den Wirkeingriff mit dem Auslöseglied (25 a) des Auslösesystems (25) aufgenommen ist.

5. Überrollschutzsystem nach Anspruch 2 und Anspruch 3, **dadurch gekennzeichnet, daß** das Betätigungselement durch einen manuell betätigbaren Betätigungsknopf (29) gebildet ist, der ein- oder zweistückig mit dem rahmenartigen Stellelement (23) verbunden ist.

6. Überrollschutzsystem nach Anspruch 2 und Anspruch 4, **dadurch gekennzeichnet, daß** das Betätigungselement durch einen mittels Werkzeug oder manuell betätigbaren oberen Fortsatz (28 d) am bügelartigen Halter (28) ein- oder mehrstückig verbunden mit diesem, gebildet ist.

7. Überrollschutzsystem nach einem der Ansprüche 1 bis 6, mit Rücklehnen der Fahrzeugsitze, die Holme als Rahmen besitzen, **dadurch gekennzeichnet, daß** die Führungseinheit für den Überrollkörper, ausgebildet als U-förmiger Überrollbügel, durch die Holme (6, 7) gebildet ist, in denen die Bügel-Schenkel (4, 5) unmittelbar geführt aufgenommen sind.

8. Überrollschutzsystem nach einem der Ansprüche 1 bis 7, **dadurch gekennzeichnet, daß** die Koppelwelle (13) und das Auslösesystem (25) in der Rückenlehne des Fahrzeugsitzes (3) integriert sind.

9. Überrollschutzsystem nach Anspruch 5 und Anspruch 8, **dadurch gekennzeichnet, daß** der Betätigungsknopf (29) so mit dem rahmenartigen Stellelement (23) verbunden ist, daß er aus der Rückenlehne (3) herausragt.

10. Überrollschutzsystem nach Anspruch 6 und Anspruch 8, **dadurch gekennzeichnet, daß** die Rückenlehne (3) eine nötigenfalls verschließbare Öffnung (31) für den Zugang zum oberen Fortsatz (28 d) aufweist.

## Claims

1. Roll-over protective system for motor vehicles, having a roll-over body that is mounted and guided in a guide unit built into the vehicle and associated with a vehicle seat, which roll-over body in the normal state is retainable by a holding device in a lower, retracted position of rest against the force of a least one pre-tensioned driving compression spring, and by release of the holding device is able to be brought by the spring force of the driving compression spring into an upper, protective locked position, wherein the holding device has a holding member connected to the roll-over body and a sensor-controlled release system arranged securely on the vehicle having a release member that is in releasable mechanical operative connection with the holding member, **characterised in that** a coupling shaft (13) mounted rotatably and securely on the vehicle and extending along the width of the roll-over body (1) is provided, to which centrally symmetrically with respect to the roll-over body there are fixed in spaced arrangement at least two holding claws (16, 17), each biased by a spring (18, 19) in the closing direction, which are arranged to be brought into retaining operative engagement with two counter-claws (20) fixed to the roll-over body (1) at a corresponding spacing, with which coupling shaft there is further associated a coupling member (22, 22 a, 23, 24; 28, 29) for an operative connection of the coupling shaft with the release member (25 a) of the release system (25), which is biased by means of a release spring (26; 30) in the opening direction of the holding claws (16, 17).

2. Roll-over protection system according to claim 1, **characterised in that** on the coupling member there is provided an operating element (29, 28 d) for reinstating the operative connection with the release member (25 a) of the release system (25) and for rotating the holding claws in the closing direction after a release of the holding device.

3. Roll-over protection system according to claim 1 or 2, **characterised in that** the coupling member comprises a frame-like actuator (23), biased by the release spring (26), to which a retaining bolt (24), for the operative engagement with the release member (25 a) of the release system (25), and a control bolt (22a) are fixed, and a control fork (22) fixed on the coupling shaft (13), which control fork grips the control bolt (22 a) in the fork opening.

4. Roll-over protection system according to claim 1 or 2, **characterised in that** the coupling member comprises a stirrup-shaped retainer (28) mounted on the coupling shaft (13) and rotatably biased by the release spring (30), the retainer having at each of its two opposite side pieces (28 a, 28 b) a respective slot (28 c), in which a shaft (29) having a retaining bolt (24 a) for operative engagement with the release member (25 a) of the release system (25) is received.

5. Roll-over protection system according to claim 2 and claim 3, **characterised in that** the operating element is formed by a manually operable operating knob (29), which is joined in one or two pieces to the frame-like actuator (23).

6. Roll-over protection system according to claim 2 and claim 4, **characterised in that** the operating element is formed by an upper extension (28 d), operable by means of a tool or manually, joined in one or more pieces to the stirrup-shaped retainer (28).

7. Roll-over protection system according to any one of claims 1 to 6, having backrests of the vehicle seats that have side rails as the frame, **characterised in that** the guide unit for the roll-over body, in the form of a U-shaped roll-over bar, is formed by the side rails (6, 7), in which the side pieces (4, 5) of the bar are directly received and guided.

8. Roll-over protection system according to any one of claims 1 to 7, **characterised in that** the coupling shaft (13) and the release system (25) are integrated in the backrest of the vehicle seat (3).

9. Roll-over protection system according to claim 5 and claim 8, **characterised in that** the operating knob (29) is joined to the frame-like actuator (23) in such a way that the knob projects from the backrest (3).

10. Roll-over protection system according to claim 6 and claim 8, **characterised in that** the backrest (3) has an opening (31), which can be locked if need be, for access to the upper extension (28 d).

## Revendications

1. Système de protection contre les tonneaux pour véhicules, comprenant un corps de protection contre les tonneaux, qui est reçu de façon guidée dans une unité de guidage solidaire du véhicule et attribué à un siège de véhicule, et qui peut être maintenu dans l'état normal contre la force d'au moins un ressort de pression d'entraînement prétendu pour un dispositif de retenue dans une position de repos rentrée et inférieure, et peut être amené en desserrant le dispositif de retenue par la force de ressort du ressort de pression d'entraînement dans une position supérieure, verrouillée et protectrice, le dispositif de retenue présentant un élément de retenue relié au corps de protection contre les tonneaux et un système de déclenchement commandé par capteur et disposé de façon solidaire du véhicule avec un élément de déclenchement qui est en liaison active mécanique amovible avec l'élément de retenue, **caractérisé en ce qu'**un arbre de couplage (13) monté à rotation de façon solidaire du véhicule et s'étendant le long de la largeur du corps de protection contre les tonneaux (1) est prévu, arbre sur lequel au moins deux griffes de retenue (16, 17) prétendues chacune par un ressort (18, 19) dans le sens de fermeture sont fixées de façon espacée et avec une symétrique centrale par rapport au corps de protection contre les tonneaux, lesquelles griffes peuvent être amenées en prise active de retenue avec deux contre-griffes (20) fixées sur le corps de protection contre les tonneaux (1) à distance appropriée, arbre auquel est attribué également un élément de couplage (22, 22 a, 23, 24 ; 28, 29) pour une liaison active de l'arbre de couplage avec l'élément de déclenchement (25 a) du système de déclenchement (25), lequel est prétendu au moyen d'un ressort de desserrage (26; 30) dans le sens d'ouverture des griffes de retenue (16, 17).

2. Système de protection contre les tonneaux selon la revendication 1, **caractérisé en ce qu'**un élément d'actionnement (29 ; 28 d) est prévu sur l'élément de couplage pour le rétablissement de la liaison active avec l'élément de déclenchement (25 a) du système de déclenchement (25) et la rotation des griffes de retenue dans le sens de fermeture est prévue après un déclenchement du dispositif de retenue.

3. Système de protection contre les tonneaux selon la revendication 1 ou 2, **caractérisé en ce que** l'élément de couplage est constitué d'un élément de réglage (23) de type cadre, prétendu par le ressort de desserrage (26), sur lequel sont fixés un boulon de retenue (24) pour la prise active avec l'élément de déclenchement (25a) du système de déclenchement et un boulon de commande (22a), et une fourche de commande (22) fixée sur l'arbre de couplage (13), qui comporte le boulon de commande (22a) dans l'ouverture de fourche.

4. Système de protection contre les tonneaux selon la revendication 1 ou 2, **caractérisé en ce que** l'élément de couplage est constitué d'un support (28) de type étrier, fixé sur l'arbre de couplage (13) et prétendu de façon rotative par le ressort de desserrage (30), lequel support présente sur chacune des deux branches (28a, 28b) opposées une fente (28c) dans laquelle est réceptionné un arbre (29) avec un boulon de retenue (24a) pour la prise active avec l'élément de déclenchement (25a) du système de déclenchement (25).

5. Système de protection contre les tonneaux selon la revendication 2 et la revendication 3, **caractérisé en ce que** l'élément d'actionnement est formé par un bouton d'actionnement (29) actionnable manuellement, lequel est relié d'une seule pièce ou en deux parties à l'élément de réglage (23) de type cadre.

6. Système de protection contre les tonneaux selon la revendication 2 et la revendication 4, **caractérisé en ce que** l'élément d'actionnement est formé par un appendice (28 d) supérieur, actionnable au moyen d'un outil ou manuellement, sur le support (28) de type étrier relié d'une seule pièce ou en deux parties avec celui-ci.

7. Système de protection contre les tonneaux selon l'une quelconque des revendications 1 à 6, avec des dossiers des sièges du véhicule, qui présentent des longerons comme cadres, **caractérisé en ce que** l'unité de guidage pour le corps de protection contre les tonneaux, conçu comme arceau de sécurité en forme de U, est formé par les montants (6, 7) dans lesquels les branches à étrier (4, 5) sont réceptionnées de façon directement guidée.

8. Système de protection contre les tonneaux selon l'une quelconque des revendications 1 à 7, **caractérisé en ce que** l'arbre de couplage (13) et le système de déclenchement (25) sont intégrés dans le dossier du siège du véhicule (3).

9. Système de protection contre les tonneaux selon la revendication 5 et la revendication 8, **caractérisé en ce que** le bouton d'actionnement (29) est relié à l'élément de réglage (23) de type cadre de telle sorte qu'il dépasse du dossier (3).

10. Système de protection contre les tonneaux selon la revendication 6 et la revendication 8, **caractérisé en ce que** le dossier (3) présente une ouverture (31) pouvant être fermée si nécessaire pour l'accès à l'appendice (28 d) supérieur.
